# EUROPÄISCHE PATENTSCHRIFT

(11) **EP 0 785 033 B1**
(45) Veröffentlichungstag und Bekanntmachung des Hinweises auf die Patenterteilung: **03.03.1999**
(21) Anmeldenummer: 96119931.2
(22) Anmeldetag: 12.12.1996
(51) Int. Cl.: B05C 1/14, B05C 1/02

(54) **Maschine zum Einfärben von geprägten Schildern, insbesondere Kraftfahrzeug-Kennzeichenschildern**
Machine for coloring stamped plates, in particular vehicle registration plates
Machine pour la coloration de plaques estampées, en particulier de plaque d'immatriculation de vehicule

(30) Priorität: 22.01.1996 DE 19602153
(43) Veröffentlichungstag der Anmeldung: 23.07.1997
(73) Patentinhaber: Erich Utsch KG, 57080 Siegen (DE)
(72) Erfinder: Wurmbach, Lothar, 57074 Siegen (DE)
(74) Vertreter: Pürckhauer, Rolf, Dipl.-Ing.

(56) Entgegenhaltungen:
- DE-A- 3 741 232

## Beschreibung

Die Erfindung betrifft eine Maschine zum Einfärben von geprägten Schildern, insbesondere Kraftfahrzeug-Kennzeichenschildern, mit einer beheizten Andruckwalze, die in einem Schwenkrahmen frei drehbar gelagert ist, einer vor der Andruckwalze angeordneten Abwickelspule und einer hinter der Andruckwalze angeordneten Aufwickelspule für ein mit heiß ablösbarer Farbe beschichtetes Kunststoff-Folienband, wobei die Andruckwalze durch die auf ein endloses, motorisch angetriebenes Förderband aufgelegten, geprägten Schilder in Drehung versetzt wird, sobald die Andruckwalze durch einen von den Schildern gesteuerten Antrieb gegen das jeweils einzufärbende Schild und das über diesem angeordnete, auf der Unterseite mit Farbe beschichtete Folienband geschwenkt worden ist, und wobei die Aufwickelspule mit einem Schlupfantrieb ausgerüstet ist, der so eingestellt ist, daß er nur bei Reibungsschluß zwischen Förderband, Schild, Folienband und Andruckwalze ausreicht, um das verbrauchte Folienband aufzuwickeln.

Die DE 40 40 386 C1 enthält den Vorschlag, den Schildprägern Schildplatinen für Kraftfahrzeug-Kennzeichenschilder zur Verfügung zu stellen, die einen eingefärbten, geprägten, umlaufenden Rand aufweisen, so daß der Schild-Endhersteller nur noch die von ihm geprägten Zahlen und Buchstaben einfärben muß, wobei sich zum Einfärben der Schilder die aus der DE 37 41 232 C2 bekannte Maschine der gattungsgemäßen Art anbietet. Die Verarbeitung von Schildplatinen mit einem eingefärbten, geprägten Rand ermöglicht es den an den Kraftfahrzeug-Zulassungsstellen ansässigen Endherstellern von Kraftfahrzeug-Kennzeichenschildern, eine schmälere und daher billigere, mit heiß ablösbarer Farbe beschichtete Kunststoffolie einsetzen zu können.

Die Funktionsweise der gattungsgemäßen Maschine nach der DE 37 41 232 C2 erfordert zum Einfärben eines Kennzeichenschildes Kunststoff-Farbfolienband mit einer der Länge des Schildes entsprechenden Länge. Von dem verhältnismäßig teuren Folienband wird jedoch nur ein Teil zum Einfärben des Schildes verbraucht, so daß beim Einfärben der Schilder eine beträchtliche Menge an ungenutztem Farbfolienband anfällt, die mit einem entsprechenden Kostenaufwand entsorgt werden muß.

Der Erfindung liegt die Aufgabe zugrunde, die Konstruktion und die Funktionsweise der gattungsgemäßen Maschine zum Einfärben von geprägten Schildern im Hinblick auf einen minimalen Verbrauch an Farbfolienband zu verbessern.

Diese Aufgabe ist erfindungsgemäß gelöst durch eine Maschine zum Einfärben von geprägten Schildern mit den Merkmalen des Patentanspruchs 1.

Die Unteransprüche beinhalten zweckmäßige Weiterbildungen der Erfindung.

Die erfindungsgemäße Maschine zum Einfärben von geprägten Schildern zeichnet sich im Vergleich zu den Maschinen nach dem Stand der Technik durch einen erheblich geringeren Verbrauch an Kunststoff-Folienband aus, das mit einer heiß ablösbaren Farbe beschichtet ist, und ermöglicht dadurch eine preiswerte Herstellung von Schildern, insbesondere von Kraftfahrzeug-Kennzeichenschildern mit einem umlaufenden, geprägten schwarzen Rand und einer Legende aus geprägten, schwarz eingefärbten Buchstaben und Zahlen.

Die Erfindung ist nachstehend anhand schematischer Zeichnungsfiguren erläutert, von denen
- Fig. 1: eine Seitenansicht einer Maschine zum Einfärben von geprägten Kraftfahrzeug-Kennzeichenschildern,
- Fig. 2: ein Kennzeichenschild,
- Fig. 3a: ein Logik-Zeitdiagramm der von der Erkennungsstation für die eingeprägten, erhabenen Buchstaben und Zahlen der Legende des Schildes nach Fig. 2 sowie die kurzen Randabschnitte des geprägten, umlaufenden, voreingefärbten Schildrandes übermittelten elektrischen Signale für die Steuerung der Andruckwalze für das von der Maschine zu verarbeitende Farbfolienband und
- Fig. 3b: ein Logik-Zeitdiagramm der Betriebs- und Ruhepositionen der Andruckwalze beim Einfärben des Kennzeichenschildes nach Fig. 2 veranschaulicht.

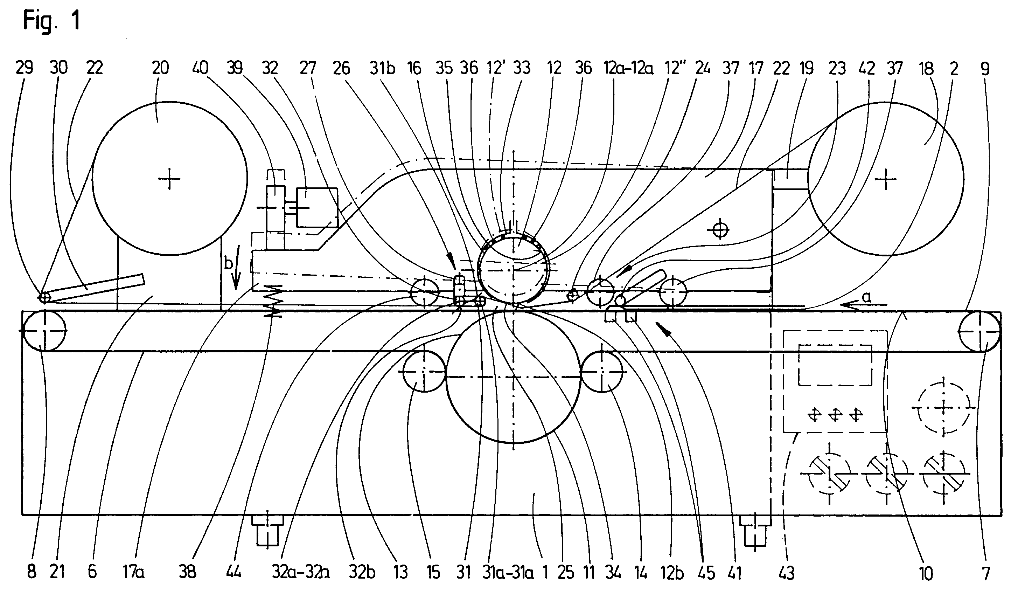

In das Gestell 1 der in Figur 1 dargestellten Maschine zum schwarzen Einfärben von Kraftfahrzeug-Kennzeichenschildern 2 aus Aluminiumblech, die mit einer reflektierenden, weißen Kunststoffolie kaschiert sind und in die eine Legende mit Buchstaben 3 und Zahlen 4 sowie ein umlaufender, schwarzer Rand 5 mit zwei langen und zwei kurzen Abschnitten 5a, 5b eingeprägt sind, mit dem die Schildplatinen bei den Schildprägern angeliefert werden, ist ein endloses Förderband 6 eingebaut, das über zwei an den Bandenden angeordnete Umlenkrollen 7, 8 geführt ist, von denen eine angetrieben ist, ferner eine an der Unterseite 10 des Obertrumms 9 des Förderbandes 6 anliegende Gegenwalze 11 für eine nachstehend beschriebene Andruckwalze 12 sowie zwei an der Oberseite 13 der Gegenwalze 11 anliegende, parallele Umlenkrollen 14, 15 für das Förderband 6.

Die über dem Förderband 6 etwa auf halber Länge desselben angeordnete, mit einer Gummischicht 16 versehene Andruckwalze 12 ist in einem auf dem Maschinengestell 1 angebrachten Schwenkrahmen 17 frei drehbar gelagert.

Achsparallel zur Andruckwalze 12 ist in Laufrichtung a des Förderbandes 6 vor der Andruckwalze 12 eine Abwickelspule 18 in einer an dem Schwenkrahmen 17 angebrachten Konsole 19 drehbar gelagert. Eine zur Andruckwalze 12 achsparallele Aufwickelspule 20 ist in einer in Laufrichtung a des Förderbandes 6 hinter der Andruckwalze 12 auf dem Maschinengestell 1 befestigten Konsole 21 drehbar gelagert. Von der Abwickelspule 18 läuft, wie nachstehend beschrieben, ein Kunststoff-Folienband 22 ab, das mit einer heiß ablösbaren schwarzen Farbe beschichtet ist. Die Aufwickelspule 20 nimmt das verbrauchte Kunststoff-Folienband 22 auf und wird von einem nicht dargestellten Schlupfantrieb intermittierend angetrieben.

Das Kunststoff-Folienband 22 wird von der Abwickelspule 18 über eine an der Unterseite des Schwenkrahmens 17 im Einlaufbereich 23 der Andruckwalze 12 angeordnete Umlenkrolle 24 durch den Spalt 25 zwischen der Andruckwalze 12 und dem auf der Gegenwalze 11 aufliegenden Förderband 6, eine im Auslaufbereich 26 der Andruckwalze 12 unmittelbar hinter dieser über dem Förderband 6 angeordnete, am Schwenkrahmen 17 befestigte Ablösevorrichtung 27 für das Folienband 22 sowie eine weitere Umlenkrolle 29, die von einem an der Konsole 21 für die Aufwickelspule 20 befestigten Ausleger 30 gehalten wird, zur Aufwickelspule 20 geführt.

Die Ablösevorrichtung 27 für das Folienband 22 besteht aus zwei hintereinander und parallel über dem Förderband 6 angeordneten, an dem Schwenkrahmen 17 der Andruckwalze 12 befestigten Umlenkrollen 31, 32, deren Achsen 31a-31a, 32a-32a quer zum Förderband 6 und parallel zur Achse 12a-12a der Andruckwalze 12 gerichtet sind. Das Folienband 22 wird über die Oberseite 31b der ersten, der Andruckwalze 12 unmittelbar nachgeordneten Umlenkrolle 31 und die Unterseite 32b der zweiten Umlenkrolle 32 geführt.

Ein geteiltes Wärmeleitblech 33 umschließt die Andruckwalze 12 bis auf eine Öffnung 34, die die beim Einfärben der Kennzeichenschilder 2 mit dem Folienband 22 in Kontakt stehende Unterseite 12b der Andruckwalze 12 freigibt. Auf der wärmereflektierenden Innenseite 35 des Wärmeleitblechs 33 sind elektrische Heizstäbe 36 zum Erhitzen der Gummibeschichtung 16 der Andruckwalze 12 angeordnet.

Im Einlaufbereich 23 der Andruckwalze 12 sind zwei beabstandete Niederhalterollen 37 für die Kennzeichenschilder 2 an dem Schwenkrahmen 17 befestigt, die quer zum Förderband 6 gerichtet sind.

Im Auslaufbereich 26 der Andruckwalze 12 sind hinter der Ablösevorrichtung 27 zwei weitere, schmale Niederhalterollen 44 an dem Maschinengestell 1 angebracht, die die langen Randabschnitte 5a des umlaufenden Randes 5 der Kennzeichenschilder 2 erfassen.

Die Andruckwalze 12 wird durch eine als Druckfeder ausgebildete Rückstellfeder 38, die sich auf dem Maschinengestell 1 abstützt und an dem Schwenkrahmen 17 angreift, in der Ruheposition 12' gehalten. Beim Einfärben eines Kennzeichenschildes 2 wird der Schwenkrahmen 17 durch einen Schrittmotor 39, der eine am freien Ende 17a des Schwenkrahmens 17 angreifende Exzenterscheibe 40 betätigt, in Pfeilrichtung b gegen die Federkraft der Rückstellfeder 38 nach unten geschwenkt, so daß die Andruckwalze 12 in die Betriebsposition 12'' gegen die Oberseite des Folienbandes 22 gedrückt wird, dessen mit heiß ablösbarer schwarzer Farbe beschichtete Unterseite auf die erhabenen Buchstaben 3 und Zahlen 4 der einzufärbenden Legende eines Kennzeichenschildes 2 gepreßt wird.

Die Maschine ist mit einer Steuerung für die Andruckwalze 12 ausgerüstet. Die Steuerung umfaßt eine im Einlaufbereich 23 der Andruckwalze 12 angeordnete, als elektromechanischer Abtaster 42 ausgebildete Erkennungseinrichtung 41 für die in die Kennzeichenschilder 2 eingeprägten, erhabenen Buchstaben 3 und Zahlen 4 einer Legende und die kurzen Randabschnitte 5b des eingeprägten, umlaufenden, schwarz eingefärbten Randes 5 sowie einen elektronischen Rechner 43 zur Verarbeitung der von der Erkennungseinrichtung 41 übermittelten Steuersignale.

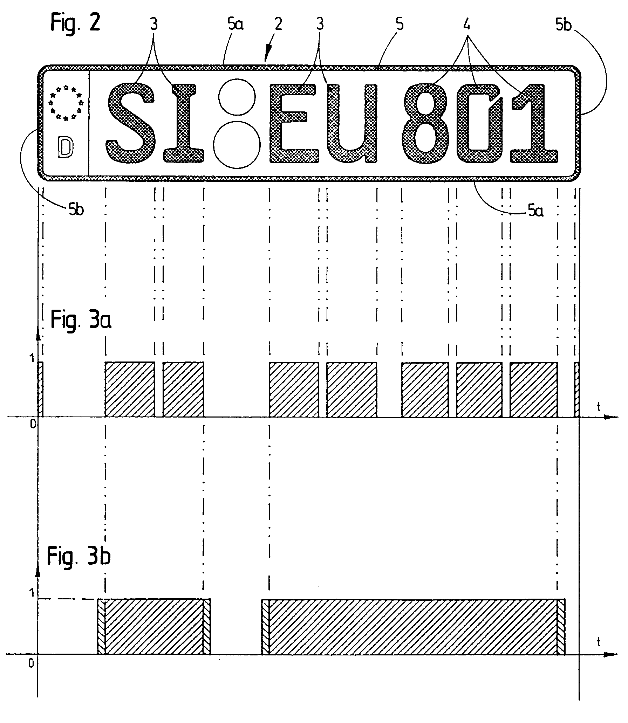

Die Maschine zum Einfärben von Kraftfahrzeug-Kennzeichenschildern arbeitet wie folgt:
Die einzufärbenden Kennzeichenschilder 2 mit einer geprägten Legende aus erhabenen Buchstaben 3 und Zahlen 4 werden auf das in Pfeilrichtung a umlaufende Förderband 6 aufgelegt. Die einzelnen Buchstaben 3 und Zahlen 4 der Legende und die beiden kurzen Randabschnitte 5b der Schilder 2 werden von dem elektromechanischen Abtaster 42 erfaßt, der entsprechende Steuersignale gemäß dem Logik-Zeitdiagramm nach Figur 3a dem Rechner 43 übermittelt. Bei Annäherung der von dem Abtaster 42 erfaßten, erhabenen Buchstabenreihe SI des Kennzeichenschildes 2 nach Figur 2 an die Andruckwalze 12 schaltet der Rechner 43 mit einer von der Geschwindigkeit des Förderbandes 6 abhängigen Zeitverzögerung über eine Steuereinheit den Schrittmotor 39 ein, der die Exzenterscheibe 40 betätigt, so daß der Schwenkrahmen 17 in Pfeilrichtung b nach unten geschwenkt wird und die Andruckwalze 12 aus der Ruheposition 12' in die Betriebsposition 12'' zur Anlage an die Oberseite des Folienbandes 22 gelangt und dieses mit der Unterseite gegen die beiden erhabenen Buchstaben SI angedrückt und die schwarze Farbe von dem Folienband 22 heiß auf die Buchstaben aufgetragen wird. Durch den Reibungskontakt zwischen Andruckwalze 12, Folienband 22, Kennzeichenschild 2 und Förderband 6 dreht sich die Andruckwalze 12 frei mit und wird das Folienband 22 ebenfalls mitgenommen. Dabei wird der verbrauchte Teil des Folienbandes 22 auf die durch einen Schlupfantrieb angetriebene Aufwickelspule 20 aufgespult. Der Schlupfantrieb für die Aufwickelspule 20 kann bei eingeschaltetem Hauptschalter der Maschine permanent laufen, wobei jedoch die Reibungskupplung so genau eingestellt werden muß, daß der Antrieb in der Ruheposition 12' der Andruckwalze 12 nicht in der Lage ist, das Folienband 22 von der Abwickelspule 18 abzuziehen, und der Antrieb nur dann wirksam wird, wenn Reibungsschluß zwischen der Gegenwalze 11, dem Förderband 6, dem Kennzeichenschild 2, dem Folienband 22 und der Andruckwalze 12 besteht.

Das Logik-Zeitdiagramm der von der Erkennungseinrichtung 41 übertragenen Steuersignale nach Figur 3a und das Arbeitsdiagramm der Andruckwalze 12 nach Figur 3b verdeutlichen, daß bei einer kurzzeitigen Aufeinanderfolge von von der Erkennungsstation 41 ausgehenden Steuersignalen, die durch die mit kurzen Abständen aufeinanderfolgenden Buchstaben S und I sowie E und U und die mit kurzen Abständen folgenden Zahlen 8, 0 und 1 der Legende des Kennzeichenschildes 2 ausgelöst werden, der Schrittmotor 39 zur Betätigung der Exzenterscheibe 40 nicht aus- und wieder eingeschaltet wird, so daß die Andruckwalze 12 in der Betriebsposition 12'' stehenbleibt, und daß bei einem längeren Abstand der Steuersignale zwischen den Buchstaben I und E die Andruckwalze 12 nach Einschalten des Schrittmotors 39 und Freigabe des freien Endes 17a des Schwenkrahmens 17 durch die Exzenterscheibe 40 die Andruckwalze 12 mit dem Schwenkrahmen 17 durch die Rückstellfeder 38 aus der Betriebsposition 12'' in die Ruheposition 12' hochgeschwenkt und damit beim Durchlaufen des Schildabschnitts zwischen den Buchstaben I und E unter der Andruckwalze 12 kein Folienband 22 verbraucht wird. Desweiteren zeigen die Figuren 3a und 3b, daß bei kurzen, von der Erkennungseinrichtung 41 ausgehenden Steuersignalen, die von den kurzen Abschnitten 5b des umlaufenden Randes 5 des Kennzeichenschildes 2 ausgelöst werden, die Andruckwalse 12 für das Folienband 22 nicht in die Betriebsposition 12'' nach unten gegen das Kennzeichenschild 2 geschwenkt wird.

In Abänderung der vorbeschriebenen Maschine zum Einfärben von geprägten Schildern 2 kann die Erkennungseinrichtung 41 aus elektronischen, berührungslos arbeitenden Sensoren 45 bestehen, und es kann ein Elektromagnet oder eine durch einen Schrittmotor 39 angetriebene Exzenterscheibe 40 mit einem in einen Führungsschlitz im Schwenkrahmen 17 eingreifenden Mitnehmer zum Antrieb des Schwenkrahmens verwendet werden, wobei bei der letztgenannten Antriebsart die Rückstellfeder 38 entfallen kann.

Die vorbeschriebene Maschine kann auch zum Einfärben der Legende von Kraftfahrzeug-Kennzeichenschildern eingesetzt werden, die - wie beispielsweise die holländischen Kennzeichenschilder - keinen geprägten umlaufenden Rand aufweisen.

## Patentansprüche

1. Maschine zum Einfärben von geprägten Schildern (2), insbesondere Kraftfahrzeug-Kennzeichenschildern, mit einer beheizten Andruckwalze (12), die in einem Schwenkrahmen (17) frei drehbar gelagert ist, einer vor der Andruckwalze (12) angeordneten Abwickelspule (18) und einer hinter der Andruckwalze (12) angeordneten Aufwickelspule (20) für ein mit heiß ablösbarer Farbe beschichtetes Kunststoff-Folienband (22), wobei die Andruckwalze (12) durch die auf ein endloses, motorisch angetriebenes Förderband (6) aufgelegten, geprägten Schilder (2) in Drehung versetzt wird, sobald die Andruckwalze (12) durch einen von den Schildern (2) gesteueiten Antrieb gegen das jeweils einzufädelnde Schild (2) und das über diesem angeordnete, auf der Unterseite mit Farbe beschichtete Folienband (22) geschwenkt worden ist, und wobei die Aufwickelspule (20) mit einem Schlupfantrieb ausgerüstet ist, der so eingestellt ist, daß er nur bei Reibungsschluß zwischen Förderband (6), Schild (2), Folienband (22) und Andruckwalze (12) ausreicht, um das verbrauchte Folienband (22) aufzuwickeln, gekennzeichnet durch eine Steuerung der Andruckwalze (12) mit einer im Einlaufbereich (23) derselben angeordneten Erkennungseinrichtung (41) für die in die Schilder (2) eingeprägten, erhabenen Buchstaben (3) und Zahlen (4) einer Legende sowie die kurzen Randabschnitte (5b) eines geprägten, umlaufenden, voreingefärbten Randes (5) sowie mit einem elektronischen Rechner (43) zur Verarbeitung der von der Erkennungsstation (41) übermittelten Steuersignale, der Rechner (43) bei Annäherung eines bzw. einer von der Erkennungsstation (41) erfaßten einzelnen Buchstabens (3) oder einer Zahl (4) oder einer Reihe von Buchstaben (3) und/oder Zahlen (4) mit kurzen Abständen an die Andruckwalze (12) über eine Steuereinheit den Antrieb zum Einschwenken der Andruckwalze (12) aus der Ruheposition (12') in die Betriebsposition (12'') gegen das Folienband (22) zur Anlage desselben an dem Schild (2) mit einer von der Geschwindigkeit des Förderbandes (6) abhängigen Zeitverzögerung zum Erkennungsvorgang einschaltet und der Rechner (43) nach dem Durchlaufen der Buchstaben (3)und/oder Zahlen (4) oder einer Reihe von Buchstaben (3) und/oder Zahlen (4) unter der Andruckwalze (12) den Antrieb zum Hochschwenken der Andruckwalze (12) aus der Betriebsposition (12'') in die Ruheposition (12') erneut einschaltet oder der Rechner (43) ein Rückstellelement, das z.B. als Rückstellfeder (38) ausgebildet ist, zum Hochschwenken der Andruckwalze (12) in die Ruhestellung (12') wirksam werden läßt.

2. Maschine nach Anspruch 1, dadurch gekennzeichnet, daß die Erkennungseinrichtung (41) aus einem elektromechanischen Abtaster (42) besteht.

3. Maschine nach Anspruch 1, dadurch gekennzeichnet, daß die Erkennungseinrichtung (41) elektronische, berührungslos arbeitende Sensoren (45) aufweist.

4. Maschine nach einem der Ansprüche 1 bis 3, dadurch gekennzeichnet, daß der Antrieb des Schwenkrahmens (17) der Andruckwalze (12) aus einem Schrittmotor (39) besteht, der eine auf das freie Ende (17a) des Schwenkrahmens (17) wirkende Exzenterscheibe (40) betätigt.

5. Maschine nach einem der Ansprüche 1 bis 3, gekennzeichnet durch einen Elektromagneten zum Antrieb des Schwenkrahmens (17) der Andruckwalze (12).

6. Maschine nach einem der Ansprüche 1 bis 5, gekennzeichnet durch eine im Auslaufbereich (26) der Andruckwalze (12) unmittelbar hinter dieser über dem Förderband (6) angeordnete Ablösevorrichtung (27) für das Folienband (22), die am Schwenkrahmen (17) der Maschine angebracht ist.

7. Maschine nach Anspruch 6, gekennzeichnet durch eine Ablösevorrichtung (27) mit zwei hintereinander und parallel über dem Förderband (6) angeordneten, an dem Schwenkrahmen (17) der Andruckwalze (12) befestigten Umlenkrollen (31, 32) oder Umlenkstäben, deren Achsen (31a-31a, 32a-32a) quer zum Förderband (6) und parallel zur Achse (12a-12a) der Andruckwalze (12) gerichtet sind, sowie eine Führung des Folienbandes (22) über die Oberseite (31b) der ersten, der Andruckwalze (12) unmittelbar nachgeordneten Umlenkrolle (31) und die Unterseite (32b) der zweiten Umlenkrolle (32).

8. Maschine nach einem der Ansprüche 1 bis 7, gekennzeichnet durch mindestens eine im Einlaufbereich (23) der Andruckwalze (12) quer zum Förderband (6) angeordnete, sich über die Schildbreite erstreckende Niederhalterolle (37) für die Schilder (2).

9. Maschine nach einem der Ansprüche 1 bis 8, gekennzeichnet durch mindestens zwei gegenüberliegende, im Auslaufbereich (26) der Andruckwalze (12) angeordnete, schmale Niederhalterollen (44), die die langen Randabschnitte (5a) des umlaufenden Randes (5) der Schilder (2) erfassen.

10. Maschine nach einem der Ansprüche 1 bis 9, gekennzeichnet durch ein geteiltes Wärmeleitblech (33), das die Andruckwalze (12) bis auf eine Öffnung (34), die die beim Einfärben der Schilder (2) mit dem Folienband (22) in Kontakt stehende Unterseite (12b) der Andruckwalze (12) freigibt, umschließt, sowie auf der wärmereflektierenden Innenseite (35) des Wärmeleitblechs (33) angeordnete, elektrische Heizstäbe (36) zum Erhitzen der aus Gummi oder dgl. Material bestehenden Beschichtung (16) der Andruckwalze (12).

11. Maschine nach einem der Ansprüche 1 bis 10, gekennzeichnet durch eine Führung des Förderbandes (6) über zwei an den Bandenden angeordnete Umlenkrollen (7, 8), von denen eine angetrieben ist, eine an der Unterseite (10) des Obertrumms (9) des Förderbandes (6) anliegende Gegenwalze (11) für die Andruckwalze (12) sowie zwei an der Oberseite (13) der Gegenwalze (11) anliegende, parallele Umlenkrollen (14, 15).

## Claims

1. Machine for inking embossed plates (2), particularly motor vehicle license plates, with a heated feed roller (12), which is mounted to rotate freely in a pivotal frame (17), with an unwinding reel (18) located in front of the feed roller (12), and with a winding-on reel (20) located behind the feed roller (12), for a plastic film strip (22) coated with head-detachable ink, the feed roller (12) being rotated by the embossed plates (2) laid on an endless motor-driven conveyor belt (6), as soon as the feed roller (12) has been pivoted by a drive controlled by the plates (2) against the plate (2) to be fed in respectively and the film strip (22) coated on the underside with ink located thereabove, and the winding-on reel (20) being fitted with a slip drive, which is so set that it is capable of winding up the consumed film strip (22) during friction connection between the film strip (6) and the plate (2), the film strip (22) and the feed roller (12), characterised by a control means of the feed roller (12) with a recognition device (41), located in the inlet area (23) of said feed roller (12), for the raised letters (3) and numbers (4) of a legend embossed in the plate (2), and the short edge sections (5b) of an embossed, revolving, pre-inked edge (5), and with an electronic computer (43) for processing the control signals transmitted by the recognition station (41), the computer (43), upon approaching a single letter (3) detected by the recognition station (41), or a number (4) or a series of letters (3) and/or numbers (4), via a control unit, switching on the drive for pivoting the feed roller (12) out of the inoperative position (12') into the operative position (12'') towards the film strip (22), providing contact of the same on the plate (2) with a time delay of the recognition procedure dependent on the speed of the conveyor belt (6), and the computer (43), after passage of the letters (3) and/or numbers (4) or a series of letters (3) and/or numbers (4) under the feed roller, again switching on the drive in order to pivot the feed roller (12) upwards out of the operative position (12'') into the inoperative position (12'), or the computer (43) causing to become effective a return member, which for example is in the form of a return spring (38), for pivoting the feed roller (12) upwards into the inoperative position (12').

2. Machine according to claim 1, characterised in that the recognition device (41) consists of an electromechanical scanner (42).

3. Machine according to claim 1, characterised in that the recognition device (41) has electronic sensors (45), operating without contact.

4. Machine according to one of claims 1 to 3, characterised in that the drive for the pivot frame (17) of the feed roller (12) consists of a stepping motor (39), which actuates an eccentric disc (40) acting on the free end (17a) of the pivot frame (17).

5. Machine according to one of claims 1 to 3, characterised by an electromagnet for propelling the pivot frame (17) of the feed roller (12).

6. Machine according to one of claims 1 to 5, characterised by a separating device (27) for the film strip (22), located in the outlet area (26) of the feed roller (12) and immediately behind it above the conveyor belt, said separating device being attached to the pivot frame (17) of the machine.

7. Machine according to claim 6, characterised by a separating device (27) with two deflector rollers (31,32) or deflector rods, located one behind the other and in parallel above the conveyor belt (6), and attached to the pivot frame (17) of the feed roller (12), the axes (31a-31a-,32a-32a) of said deflecting rollers or rods being aligned transversely to the conveyor belt (6) and parallel to the axis (12a-12a) of the feed roller (12), and a guide means for the film strip (22) above the upper side (31b) of the first deflecting roller (31) immediately following the feed roller (12), and the underside (32b) of the second deflecting roller (32).

8. Machine according to one of claims 1 to 7, characterised by at least one holding-down roller (37) for the plates (2), located in the inlet area (23) of the feed roller (12) transversely to the conveyor belt (6), and extending over the plate width.

9. Machine according to one of claims 1 to 8, characterised by at least two narrow holding-down rollers (44) lying opposite one another, located in the outlet area (26) of the feed roller (12), and which detect the long lateral sections (5a) of the revolving edge (5) of the plates (2).

10. Machine according to one of claims 1 to 9, characterised by a divided heat-conducting plate (33), surrounding the feed roller (12) except for an opening (34), which exposes the underside (12b) of the feed roller (12) in contact with the film strip (22) during inking of the plates (2), and electrical heating bars (36), located on the heat-reflecting inner side (35) of the heat-conducting plate (33), for heating the coating (16), consisting of rubber or the like material, of the feed roller (12).

11. Machine according to one of claims 1 to 10, characterised by a guide means for the conveyor belt (6) via two deflecting rollers (7,8) located at the belt ends, of which one is driven, a counter-roller (11) for the feed roller (12), contacting the underside (10) of the upper length (9) of the conveyor belt (6), and two parallel deflecting rollers (14,15) contacting the upper side (13) of the counter-roller (11)

## Revendications

1. Machine pour la coloration de plaques (2) estampées, notamment de plaques d'immatriculation de véhicule automobile, comprenant un cylindre (12) presseur chauffé, qui est monté à libre rotation dans un cadre (17) pivotant, une bobine (18) débitrice disposée avant le cylindre (12) presseur et une bobine (20) réceptrice disposée après le cylindre (12) presseur, pour une bande (22) de film plastique enduit de peinture décollable à chaud, le cylindre (12) presseur étant mis en rotation, par les plaques (2) estampées posées sur une bande (6) transporteuse sans fin motorisée, dès que le cylindre (12) presseur a été pivoté, par un entraînement commandé par les plaques (2), contre la plaque (2) respective à colorer et la bande (22) de film disposée au-dessus de cette plaque et enduite de peinture sur sa face inférieure, et la bobine (20) réceptrice étant équipée d'un entraînement glissant qui est réglé de telle sorte qu'il ne suffit à renvider la bande (22) de film utilisée qu'en cas d'engagement par friction entre la bande (6) transporteuse, la plaque (2), la bande (22) de film et le cylindre (12) presseur, **caractérisée** par un système de commande du cylindre (12) presseur qui comprend un dispositif (41) de reconnaissance, disposé dans la région (23) d'entrée du cylindre (12) presseur, pour les lettres (3) et chiffres (4) en relief d'une légende qui sont estampés dans les plaques (2) ainsi que pour les parties (5b) courtes d'un bord (5) entourant estampé préalablement coloré, et un calculateur (43) électronique pour le traitement des signaux de commande transmis par le poste (41) de reconnaissance, le calculateur (43), lorsque s'approche du cylindre (12) presseur une lettre (3) individuelle ou un chiffre (4) individuel, ou une série de lettres (3) et/ou de chiffres (4) peu espacés, détecté(e) par le poste (41) de reconnaissance, mettant en marche, par l'intermédiaire d'une unité de commande et avec un retard de temps par rapport au processus de reconnaissance qui est fonction de la vitesse de la bande (6) transporteuse, l'entraînement pour le pivotement rentrant du cylindre (12) presseur de la position (12') de repos dans la position (12'') de service contre la bande (22) de film afin que cette dernière s'applique contre la plaque (2), et le calculateur (43), une fois que les lettres (3) et/ou chiffres (4) ou la série de lettres (3) et/ou de chiffres (4) sont passés sous le cylindre (12) presseur, mettant à nouveau en marche l'entraînement pour relever par pivotement le cylindre (12) presseur de la position (12'') de service dans la position (12') de repos, ou bien le calculateur (43) laissant alors agir un élément de rappel, réalisé par exemple sous forme de ressort (38) de rappel, pour relever par pivotement le cylindre (12) presseur dans la position (12') de repos.

2. Machine suivant la revendication 1, **caractérisée** en ce que le dispositif (41) de reconnaissance consiste en un détecteur (42) électromécanique.

3. Machine suivant la revendication 1, **caractérisée** en ce que le dispositif (41) de reconnaissance comporte des détecteurs (45) électroniques travaillant sans contact.

4. Machine suivant l'une des revendications 1 à 3, **caractérisée** en ce que l'entraînement du cadre (17) pivotant du cylindre (12) presseur consiste en un moteur (39) pas à pas, qui actionne un disque (40) excentrique agissant sur l'extrémité (17a) libre du cadre (17) pivotant.

5. Machine suivant l'une des revendications 1 à 3, **caractérisée** par un électroaimant pour l'entraînement du cadre (17) pivotant du cylindre (12) presseur.

6. Machine suivant l'une des revendications 1 à 5, **caractérisée** par un dispositif (27) de décollement pour la bande (22) de film, qui est monté sur le cadre (17) pivotant de la machine en étant disposé dans la région (26) de sortie du cylindre (12) presseur juste après ce dernier, au-dessus de la bande (6) transporteuse.

7. Machine suivant la revendication 6, **caractérisée** par un dispositif (27) de décollement comprenant deux poulies (31, 32) ou barres de renvoi, disposées l'une après l'autre en parallèle au-dessus de la bande (6) transporteuse, fixées sur le cadre (17) pivotant du cylindre (12) presseur et dont les axes (31a-31a, 32a-32a) sont orientés transversalement à la bande (6) transporteuse et parallèlement à l'axe (12a-12a) du cylindre (12) presseur, et par un guidage de la bande (22) de film au-dessus de la face (31b) supérieure de la première poulie (31) de renvoi, disposée à la suite immédiate du cylindre (12) presseur, et de la face (32b) inférieure de la deuxième poulie (32) de renvoi.

8. Machine suivant l'une des revendications 1 à 7, **caractérisée** par au moins un galet (37) de maintien pour les plaques (2), s'étendant sur la largeur des plaques et disposé transversalement à la bande (6) transporteuse dans la région (23) d'entrée du cylindre (12) presseur.

9. Machine suivant l'une des revendications 1 à 8, **caractérisée** par au moins deux galets (44) étroits de maintien, qui sont disposés en vis-à-vis dans la région (26) de sortie du cylindre (12) presseur et qui embrassent les parties (5a) longues du bord (5) entourant des plaques (2).

10. Machine suivant l'une des revendications 1 à 9, **caractérisée** par une tôle (33) divisée conductrice de chaleur, qui entoure le cylindre (12) presseur à l'exception d'une ouverture (34) qui libère la face (12b) inférieure du cylindre (12) presseur qui se trouve en contact avec la bande (22) de film lors de la coloration des plaques (2), et par des barreaux (36) chauffants électriques, disposés sur la face (35) intérieure, réfléchissant la chaleur, de la tôle (33) conductrice de chaleur et destinés à chauffer le revêtement (16), en caoutchouc ou matière analogue, du cylindre (12) presseur.

11. Machine suivant l'une des revendications 1 à 10, **caractérisée** par un guidage de la bande (6) transporteuse sur deux poulies (7, 8) de renvoi, disposées aux extrémités de la bande et dont une est entraînée, sur un cylindre (11) conjugué pour le cylindre (12) presseur, cylindre conjugué qui s'applique contre la face (10) inférieure du brin (9) supérieur de la bande (6) transporteuse, et sur deux poulies (14, 15) parallèles de renvoi, qui s'appliquent contre la face (13) supérieure du cylindre (11) conjugué.
